(19) Europäisches Patentamt
European Patent Office
Office européen des brevets

(11) EP 2 647 849 A2

(12) **EUROPÄISCHE PATENTANMELDUNG**

(43) Veröffentlichungstag:
09.10.2013 Patentblatt 2013/41

(51) Int Cl.:
*F15B 1/24* (2006.01)

(21) Anmeldenummer: 13160522.2

(22) Anmeldetag: 22.03.2013

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 02.04.2012 DE 102012205363

(71) Anmelder: MARCO SYSTEMANALYSE UND
ENTWICKLUNG GmbH
D-85221 Dachau (DE)

(72) Erfinder: Reuter, Martin
85221 Dachau (DE)

(74) Vertreter: Manitz, Finsterwald & Partner GbR
Martin-Greif-Strasse 1
80336 München (DE)

(54) **Positionsbestimmungsvorrichtung**

(57) Vorrichtung zur Bestimmung der Position eines beweglichen Trennelements (10), das innerhalb eines Speichers (12) als Abtrennung zwischen einem Gasraum (14) und einem Fluidraum (16) angeordnet ist, wobei die Bestimmungsvorrichtung zumindest einen Drucksensor (26) zur Erfassung von Druckdaten, zumindest einen Ultraschallsensor (28) zur Erfassung von Ultraschalldaten und zumindest eine Rechnereinheit (30) zum Auswerten der Daten umfasst, mit der die Position des Trennelements bestimmbar ist.

Fig. 1

EP 2 647 849 A2

**Beschreibung**

Die Erfindung betrifft eine Vorrichtung und ein Verfahren zur Bestimmung der Position eines beweglichen Trennelements, insbesondere eines Kolbens, das innerhalb eines, insbesondere zylinderförmigen, Speichers als Abtrennung zwischen einem Gasraum und einem Fluidraum angeordnet ist.

Derartige Speicher, insbesondere Kolbenspeicher, Membranspeicher oder Blasenspeicher, werden in Hydrauliksystemen, beispielsweise bei Baggern, eingesetzt und dienen unter anderem zur Speicherung von hydraulischer Energie. Ein Speicher kann dabei als zylindrisches Rohr ausgebildet sein, das sowohl auf der Fluidseite als auch auf der Gasseite mit einem Deckel versehen ist. Das Trennelement trennt das Fluid, insbesondere eine Hydraulikflüssigkeit wie z.B. Öl, vom Gas, z.B. Stickstoff.

Wird nun Fluid gegen das Gas in den Speicher gepresst, verschiebt sich das Trennelement, wodurch das Gas komprimiert wird. Das Gas nimmt somit Energie auf. Das Befüllen des Speichers dauert typischerweise etwa 3 bis 5 Sekunden. Zu einem späteren Zeitpunkt kann die derart gespeicherte Energie durch Volumenentnahme wiedergewonnen werden.

Die zurückgewonnene Energie hängt dabei vom Wirkungsgrad und entstandenen Verlusten ab. Letztere sind darauf zurückzuführen, dass die Zustandsänderung nicht über den ganzen Zeitraum adiabatisch erfolgt, da es aufgrund der hohen auftretenden Drücke nicht möglich ist, die Wände des Speichers genügend isolierend auszuführen. Zudem können Gasverluste auftreten.

Im Betrieb wird der Druck im Gasraum an den Druck im Fluidraum angepasst, damit sich das Trennelement an einer geeigneten Stelle innerhalb des Speichers befindet. Mögliche Differenzen zwischen dem Druck im Fluidraum und dem Druck im Gasraum sind auf die Reibung des Trennelements zurückzuführen.

Als Gasraum wird vorliegend jegliches Volumen bezeichnet, das mit Gas gefüllt ist. Der Gasraum schließt somit sowohl den Bereich des Speichers ein, der mit Gas gefüllt ist, als auch einen oder mehrere Gasbehälter, die mit dem Speicher verbunden sind, sowie etwaige gasgefüllte Verbindungsleitungen, die im Folgenden auch als Gasleitungen bezeichnet werden, samt Gasanschlüssen. Durch zusätzlich angeschlossene Gasbehälter kann das Speichervolumen einfach und kostengünstig vergrößert werden.

Um einen sicheren Betrieb zu gewährleisten, ist es erforderlich, den Druck im Gasraum von Zeit zu Zeit zu kontrollieren. So ist beispielweise, abhängig von der Betriebsart des Speichers, mit gewissen Verlusten des Gases zu rechnen. Zudem darf der Druck im Gasraum einen bestimmten Mindestwert nicht unterschreiten, damit die Funktion des Systems aufrechterhalten wird.

Es muss also stets kontrolliert werden, ob der Speicher die gewünschte Mindestenergie liefern kann. Werden mehrere Speicher parallel geschaltet, muss überprüft werden, dass kein Speicher einen bestimmten Mindestdruck unterschreitet. Zudem müssen fehlerhafte Speicher identifiziert werden können.

Es ist bekannt, die Temperatur des Gases zur Bestimmung des Drucks im Gasraum zu messen. Eine präzise Messung der Temperatur gestaltet sich jedoch vor allem aufgrund der inhomogenen Verteilung des Gases als schwierig. Eine darauf basierende Bestimmung der Position des Trennelements mithilfe der Gasgesetze ist somit nicht möglich bzw. mit großen Fehlern behaftet.

Zudem ist bekannt, mithilfe von Sensoren die Position des Trennelements zu bestimmen. Hierbei kommen beispielsweise Seilzugmesssysteme zum Einsatz. Diese sind jedoch bzgl. der maximalen Geschwindigkeit des Trennelements begrenzt und für hohe Lastwechsel und große Lastwechselzahlen ungeeignet.

Alternativ kann die Position des Trennelements anhand einer mit dem Trennelement verbundenen Stange gemessen werden, welche aus dem Speicher herausgeführt wird. Eine herausgeführte Stange benötigt jedoch zusätzliche Abdichtungen an der Stange. Außerdem ist der zusätzliche Platzbedarf nachteilig.

Es sind auch magnetische Vorrichtungen bekannt, die auf dem Trennelement befestigt sind und Informationen durch das Speichergehäuse hindurch nach außen übertragen. Derartige Systeme sind komplex aufgebaut und daher häufig störanfällig.

Ferner ist bekannt, Ultraschallsensoren zur Bestimmung der Position des Trennelements zu verwenden. Kommt es im Fluid jedoch zur Bildung von Gasblasen, beispielsweise aufgrund einer schnellen Expansion des Fluids, oder zu einer inhomogenen Verteilung, beispielsweise aufgrund eines starken Temperaturgradienten, wird die Schallausbreitung durch Streuung und Ablenkung der Schallsignale gestört, wodurch die Ultraschalldaten verfälscht werden.

Es ist eine Aufgabe der Erfindung, bei kompakter Bauweise eine genaue Bestimmung der Position des Trennelements zu ermöglichen.

Die Aufgabe wird durch eine Vorrichtung mit den Merkmalen des Anspruchs 1 gelöst.

Erfindungsgemäß umfasst die Bestimmungsvorrichtung zumindest einen Drucksensor zur Erfassung von Druckdaten, zumindest einen Ultraschallsensor zur Erfassung von Ultraschalldaten und zumindest eine Rechnereinheit zum Auswerten der Daten, mit der die Position des Trennelements bestimmbar ist.

Die Bestimmungsvorrichtung umfasst zumindest einen Temperatursensor zur Erfassung von Temperaturdaten. Der Bestimmungsvorrichtung steht somit ein weiterer Sensor zur Verfügung. Die zusätzlichen Temperaturdaten, welche an die Rechnereinheit übergeben werden, ermöglichen die Bestimmung eventuell auftretender Gasverluste.

Um insbesondere die Gasmenge zu bestimmen und Gasverluste zu erkennen, benötigt man den Druck, das Volumen sowie die Temperatur. Das Volumen kann durch den Hub des Trennelements bestimmt werden. Der Druck im Gasraum entspricht insbesondere, bis auf Reibungsunterschiede, dem Druck im Fluidraum. Auch die Temperatur im Gasraum entspricht im Mittel insbesondere der Temperatur im Fluidraum.

Wenn weniger Gas im Speicher vorhanden ist, kann sich durch eine höhere Temperatur derselbe Druck ergeben. Durch eine alleinige Messung des Drucks und des Hubs ist eine Bestimmung der Gasmenge nur unzureichend möglich. Ist z.B. nur eine geringe Menge an Gas im Speicher enthalten, so wird der Druck bei einer Entladung schneller absinken, als bei einer größeren Menge an Gas. Im ersten Fall ist die gespeicherte Energie insbesondere geringer als im zweiten Fall.

Durch eine Temperaturmessung kann die Gasmenge präzise bestimmt werden. Somit kann auch exakt berechnet werden, ob die gespeicherte Menge an Energie ausreicht, um eine bestimmte Aktion auszuführen.

Ist beispielsweise wenig Energie im Speicher verfügbar, muss ein Motor entsprechend mehr Energie liefern. Dies kann zu verlangsamten Bewegungsabläufen führen.

Ein Zustand kann durch die Messung des Drucks, der Kolbenposition sowie der Temperatur vollständig erfasst werden.

Dadurch, dass mehrere unabhängige Sensoren Daten ermitteln, welche an eine Rechnereinheit weitergegeben werden, wird eine genaue Bestimmung der Position des Trennelements ermöglicht. Die Systeme ergänzen sich gegenseitig. So kann beispielsweise die Bestimmung der Position des Trennelements mithilfe von Druckdaten durch die Ultraschalldaten stabilisiert werden. Alternativ kann auch die Bestimmung der Position des Trennelements mithilfe von Ultraschalldaten durch die Druckdaten verbessert werden. Auf diese Weise ist trotz auftretender Inhomogenitäten im Gas, Gasverlusten oder Gasblasenbildungen im Fluid eine präzise Bestimmung der Position des Trennelements möglich.

Insbesondere die Gasverluste können dabei durch den Temperatursensor ermittelt werden.

Eine kombinierte Messung aus Druck, Kolbenposition und Temperatur ermöglicht auch eine genaue Bestimmung der Gasmenge im Speicher.

Vorteilhafte Ausführungsformen der Erfindung sind in den Unteransprüchen, der Beschreibung und den Zeichnungen beschrieben.

Gemäß einer Ausführungsform ist zumindest ein Temperatursensor mit dem Fluid wärmegekoppelt. Der Temperatursensor kann dabei im Fluid selbst angeordnet sein. Alternativ oder zusätzlich ist zumindest ein Temperatursensor mit dem Gas wärmegekoppelt. Der Temperatursensor kann auch beispielsweise im Gasraum, d.h. im mit Gas gefüllten Bereich des Speichers, in einem Gasbehälter oder in einer Gasleitung, angeordnet sein. Alternativ oder zusätzlich ist zumindest ein Temperatursensor mit der Umgebungsluftwärmegekoppelt. Der Temperatursensor befindet sich somit insbesondere außerhalb des Speichers und misst die Umgebungstemperatur außerhalb der Vorrichtung. Insbesondere bei einer Kombination dieser an verschiedenen Orten angeordneten Temperatursensoren wird eine Vielzahl von Daten erfasst, welche, zusammen mit den Druck- und Ultraschalldaten, eine präzise Bestimmung der Position des Trennelements ermöglichen.

Nach einer weiteren Ausführungsform erfasst der Drucksensor den Druck im Fluidraum. Der Drucksensor ist somit unmittelbar oder mittelbar, beispielsweise über ein Rohr, mit dem Fluidraum verbunden. Alternativ oder zusätzlich ist jedoch auch denkbar, den Druck im Gasraum mithilfe eines Drucksensors zu erfassen.

Der Ultraschallsensor kann beispielsweise in den Fluidraum Ultraschallsignale abstrahlen. Dazu ist dieser unmittelbar oder mittelbar mit dem Fluidraum verbunden. Alternativ oder zusätzlich ist jedoch auch denkbar, dass ein Ultraschallsensor in den Gasraum abstrahlt.

Gemäß einer weiteren Ausführungsform bilden die Rechnereinheit, der Drucksensor und der Ultraschallsensor eine gemeinsame Einheit. Die Einheit kann zudem den Temperatursensor umfassen. Die Bauteile können somit in einem Gehäuse angeordnet bzw. in einer Baugruppe integriert sein. Es ist jedoch auch denkbar, die Rechnereinheit, den Drucksensor, den Ultraschallsensor und gegebenenfalls den Temperatursensor als separate Bauteile auszubilden. Hierbei werden die Daten über Datenleitungen an die Rechnereinheit übertragen. Alternativ ist auch eine drahtlose Datenübermittlung, z.B. über Funk, denkbar.

Gemäß einer weiteren Ausführungsform ist in dem Gasraum ein Mittel, insbesondere ein Festkörper, zur Wärmespeicherung angeordnet. Bei dem Mittel kann es sich beispielsweise um ein Metall oder Metallmischungen, z.B. Stahl und/oder Eisen, handeln. Insbesondere kann das Mittel Metallwolle, ein Drahtknäul, Bleche und/oder Lamellen umfassen. Vorzugsweise ist das Mittel als Wellblechzylinder ausgebildet. Alternativ können Bleche gewellt werden, wobei benachbarte Wellbleche vorzugsweise versetzt zueinander ausgerichtet sein können, um Hohlräume zu schaffen. Auch sind Blechscheiben unterschiedlicher Dicke mit gepressten Noppen als Abstandshalter möglich, insbesondere in Bereichen, in denen eine hohe Wärmekapazität pro Volumen erreicht werden soll und/oder ein individuelles Anpassen an den Einbauort notwendig ist. Das Mittel stellt dem Gasraum eine zusätzliche thermische Kapazität zur Verfügung. Bei Druckbeaufschlagung durch das Fluid wird bei einer nahezu adiabatischen Zustandsänderung des Gases das Gas komprimiert und somit die Temperatur des Gases erhöht. Ohne ein Mittel zur Wärmespeicherung hat das Gas somit zunächst einen hohen Druck, kühlt jedoch innerhalb kurzer Zeit, ca. einer Sekunde, im Speicher ab und verliert somit Energie. Durch das Mittel zur Wärmespeicherung wird das Gas hingegen nahezu instantan abgekühlt, sodass der Druck im Gasraum bereits während der Kompression geringer ist.

Ein Vergleich der Wärmekapazität von Stickstoff bei beispielsweise 100 °C und Drücken von 100-200 bar mit der Wärmekapazität von Stahl ergibt insbesondere, dass bereits ein zusätzlicher Volumenanteil von 0,5 % Stahl ausreicht, um die Erwärmung im Gasraum zu halbieren. Der Speicher kann daher mehr Energie aufnehmen, wodurch die Speicherkapazität erhöht wird. Selbiges gilt in umgekehrter Weise bei der Expansion des Gases.

Der Gasdruck stellt sich aufgrund des Mittels zur Wärmespeicherung schnell auf eine isotherme Zustandsänderung des Gases ein, welche nahe der Adiabate ist. Die Art der Zustandsänderung ist somit bekannt, wodurch die Bestimmung der Position des Trennelements durch die Druckmessung präziser wird.

Nach einer weiteren Ausführungsform ist im Trennelement und/oder in einer Gasleitung zwischen einem Gasspeicher und einem Gasbehälter und/oder in einem Gasbehälter ein Mittel, insbesondere ein Festkörper, zur Wärmespeicherung angeordnet.

Der Begriff Gasleitung umfasst insbesondere auch einen Gasanschluss, also eine Verbindungsstelle zwischen der eigentlichen Gasleitung und dem Gasspeicher bzw. Gasbehälter.

Bei dem Mittel kann es sich beispielsweise um ein Metall oder Metallmischungen, z.B. Stahl und/oder Eisen, handeln. Insbesondere kann das Mittel Metallwolle, ein Drahtknäul, Bleche und/oder Lamellen umfassen. Vorzugsweise ist das Mittel als Wellblechzylinder ausgebildet. Alternativ können Bleche gewellt werden, wobei benachbarte Wellbleche vorzugsweise versetzt zueinander ausgerichtet sein können, um Hohlräume zu schaffen. Auch sind Blechscheiben unterschiedlicher Dicke mit gepressten Noppen als Abstandshalter möglich, insbesondere in Bereichen, in denen eine hohe Wärmekapazität pro Volumen erreicht werden soll und/oder ein individuelles Anpassen an den Einbauort notwendig ist.

Bevorzugt kann also der gesamte Gasraum, der nicht durch den Hub des Trennelements betroffen ist, mit einem Mittel zur Wärmespeicherung ausgestattet sein.

Auch das Trennelement selbst kann Wärme speichern. Der Wärmespeicher wird bei einer Bewegung des Trennelements mitbewegt, ohne seine Struktur zu verändern. Der Wärmespeicher wird also weder auseinandergezogen noch gestaucht. Die Konstruktion gestaltet sich dadurch einfach und stabil.

Durch einen Wärmespeicher in der Gasleitung kann auch bereits beim Überströmen des Gases vom Gasraum in den Gasbehälter Wärme vom Gas aufgenommen werden.

Der Wärmespeicher im Trennelement bzw. in der Gasleitung erhöht die Speicherkapazität. Zudem wird die Abkühlung des Gases beschleunigt.

Nach einer weiteren Ausführungsform ist der Volumenanteil des Mittels zur Wärmespeicherung, insbesondere der Volumenanteil an Metall, im Trennelement, in der Gasleitung und/oder im Gasbehälter unterschiedlich. Als Metall kann beispielsweise Eisen verwendet werden, da Eisen eine sehr hohe Wärmekapazität pro Volumen hat.

Nach einer vorteilhaften Ausführungsform ist die spezifische Wärmekapazität des Mittels zur Wärmespeicherung im Trennelement und in der Gasleitung und/oder in der Gasleitung und im Gasbehälter unterschiedlich. Bevorzugt ist die spezifische Wärmekapazität des Mittels zur Wärmespeicherung im Trennelement größer als in der Gasleitung und/oder in der Gasleitung größer als im Gasbehälter.

Gemäß einer weiteren vorteilhaften Ausführungsform beträgt der Volumenanteil des Mittels zur Wärmespeicherung in der Gasleitung zwischen etwa 20 % und 70 %, vorzugsweise zwischen etwa 25 % und 50 %, besonders bevorzugt zwischen etwa 30 % und 40 %, und/oder in dem Gasbehälter zwischen etwa 5 % und 15 %, vorzugsweise etwa 10 %. Gerade beim Verdichten treten hohe Temperaturen auf, die möglichst schnell abgeführt werden müssen. Um das System insbesondere isotherm betreiben zu können, ist vor allem in der Gasleitung eine große Wärmekapazität erforderlich. Die Gasleitung kann insbesondere verschiedene Bereiche mit unterschiedlichen Volumenanteilen des Wärmespeichermittels aufweisen.

Die Erfindung betrifft zudem eine Vorrichtung mit einem Speicher und einem beweglichen Trennelement, das innerhalb des Speichers als Abtrennung zwischen einem Gasraum und einem Fluidraum angeordnet ist. In dem Trennelement ist ein Mittel, insbesondere ein Festkörper, zur Wärmespeicherung angeordnet.

Bei dem Mittel kann es sich beispielsweise um ein Metall oder Metallmischungen, z.B. Stahl und/oder Eisen, handeln. Insbesondere kann das Mittel Metallwolle, ein Drahtknäul, Bleche und/oder Lamellen umfassen. Vorzugsweise ist das Mittel als Wellblechzylinder ausgebildet. Alternativ können Bleche gewellt werden, wobei benachbarte Wellbleche vorzugsweise versetzt zueinander ausgerichtet sein können, um Hohlräume zu schaffen. Auch sind Blechscheiben unterschiedlicher Dicke mit gepressten Noppen als Abstandshalter möglich. Das Mittel stellt dem Gasraum eine zusätzliche thermische Kapazität zur Verfügung.

Der Gasraum kann einen Gasspeicher, einen oder mehrere Gasbehälter und/oder Gasleitungen umfassen. Auch im Gasbehälter und/oder in der Gasleitung kann ein Mittel zur Wärmespeicherung vorgesehen sein. Der Volumenanteil des Mittels zur Wärmespeicherung im Trennelement, in der Gasleitung und/oder im Gasbehälter kann unterschiedlich sein. Der Volumenanteil des Mittels zur Wärmespeicherung in der Gasleitung kann beispielsweise zwischen etwa 20 % und 70 %, vorzugsweise zwischen etwa 25 % und 50 %, besonders bevorzugt zwischen etwa 30 % und 40 %, betragen. Der Volumenanteil im Gasbehälter kann z.B. zwischen etwa 5 % und 15 %, vorzugsweise etwa 10 % sein.

Die folgenden Ausführungsformen betreffen beide erfindungsgemäße Vorrichtungen:

Nach einer Ausführungsform beträgt der Volumenanteil des Mittels zur Wärmespeicherung im Trennelement zwischen etwa 5 % und 15 %, vorzugsweise etwa 10 %.

Alternativ weist das Trennelement zumindest zwei Bereiche mit unterschiedlichen Volumenanteilen des Mittels zur Wärmespeicherung auf. Insbesondere liegt der Volumenanteil in einem ersten Bereich zwischen etwa 5 % und 15 %, vorzugsweise etwa 10 %, und in einem zweiten Bereich zwischen etwa 20 % und 70 %, vorzugsweise zwischen etwa 25 % und 50 %, besonders bevorzugt zwischen etwa 30 % und 40 %.

Auch sind mehrere Bereiche denkbar mit Volumenanteilen von etwa 10 %, 20 %, 30 % und 40 %.

Es kann insbesondere ein gleitender Übergang zwischen den Bereichen vorgesehen sein.

Gemäß einer weiteren Ausführungsform weist das Mittel zur Wärmespeicherung eine höhere Wärmeleitfähigkeit als eine Wandung des Gasraums auf. Beim Komprimieren des Gases wird insbesondere sofort ein Teil der gespeicherten Energie in Form von Wärmeenergie in dem Mittel zur Wärmespeicherung gespeichert. Das Gas erwärmt sich weniger stark und gibt dadurch Energie langsamer über die Wandung des Gasraums an die Umgebung ab. Energieverluste werden somit verringert und der Wirkungsgrad des Speichers wird damit erhöht. Außerdem verläuft der Druckanstieg bei Kompression weniger steil und der Druck ist weniger zeitabhängig, da die Temperaturabsenkung durch Abkühlung geringer ist. Ein möglichst konstanter Druck ist für eine genaue Messung wünschenswert.

Nach einer weiteren Ausführungsform weist das Mittel zur Wärmespeicherung eine größere Oberfläche als eine Innenfläche einer Wandung des Gasraums auf. Zur verbesserten Wärmeaufnahme bzw. -abgabe hat das Mittel zur Wärmespeicherung somit eine große Oberfläche. Dies wird beispielsweise dadurch erreicht, dass die Bleche oder Lamellen eine Gitter- oder Wellenstruktur aufweisen. Zudem ist denkbar, beispielsweise Stahlwolle oder Eisenwolle als Mittel zur Wärmeaufnahme zu verwenden. Durch das Einbringen des Mittels zur Wärmespeicherung mit einer großen Oberfläche in den Gasraum nähert sich die Zustandsänderung der isothermischen Zustandsänderung an. Das Mittel zur Wärmespeicherung verbessert auf diese Weise die Vorhersage des Zustands durch die Druckmessung, reduziert Energieverluste und erhöht zudem die Speicherkapazität.

Die Erfindung betrifft zudem ein Verfahren zur Bestimmung einer Position eines Trennelements, insbesondere eines Kolbens, das sich innerhalb eines, insbesondere zylinderförmigen, Speichers zwischen einem Gasraum und einem Fluidraum bewegt und diese Räume voneinander trennt. Insbesondere im Fluidraum werden erfindungsgemäß Druckdaten mithilfe zumindest eines Drucksensors erfasst. Die Druckdaten werden an zumindest eine Rechnereinheit übertragen, welche die Druckdaten auswertet und daraus das Volumen und die Position des Trennelements bestimmt. Gleichzeitig oder anschließend werden, insbesondere im Fluidraum, mithilfe zumindest eines Ultraschallsensors Ultraschalldaten erfasst. Alternativ oder zusätzlich ist auch denkbar, Druckdaten und/oder Ultraschalldaten im Gasraum zu erfassen. Die Ultraschalldaten werden an die Rechnereinheit übertragen, welche mithilfe der Ultraschalldaten die Positionsbestimmung des Trennelements korrigiert. Die erfassten Druckdaten werden somit insbesondere durch die Ultraschalldaten stabilisiert.

Durch die Kombination aus Druckdatenerfassung und Ultraschalldatenerfassung können die Nachteile der einzelnen Erfassungsmethoden umgangen werden. Eine stabile Bestimmung der Position des Trennelements wird somit ermöglicht. Mit diesem Verfahren können unbekannte Größen und Daten, welche die Messung beeinflussen, parametrisiert werden und aus den erfolgten Messungen kann ein Druck-Weg-Verhalten bestimmt werden. Dieses Verhalten kann beispielsweise auf gleichartige Anlagen übertragen werden und als Startwert für eine anlagenspezifische automatische Optimierung eingesetzt werden.

Das Verfahren umfasst zusätzlich ein Erfassen von Temperaturdaten, insbesondere des Fluids und/oder des Gases und/oder der Umgebungsluft, mithilfe zumindest eines Temperatursensors, wobei die Temperaturdaten an die Rechnereinheit übertragen werden und insbesondere zur Positionsbestimmung verwendet werden können. Dadurch kann z.B. die Berechnung der Position des Trennelements auf Basis der Zustandsgleichung des nicht-idealen Gases verbessert werden. Die Temperatur des Fluids, des Gases und/oder der Umgebung wird insbesondere dazu gemessen, um Gasverluste detektieren und bestimmen zu können.

Gemäß einer Ausführungsform werden fehlerhafte und/oder fehlende Ultraschalldaten ausgefiltert und nicht zur Korrektur der Positionsbestimmung verwendet. Fehlerhafte Ultraschallmesswerte können beispielsweise aufgrund einer sprunghaften Änderung des Messwertes auftreten oder aufgrund von Werten, welche außerhalb des Trennelementwegs liegen. Das Ausfiltern erfolgt beispielsweise mithilfe geeigneter Algorithmen in der Rechnereinheit. Die Berechnung des Trennelementwegs auf Basis der Druckmessung wird somit mithilfe korrekter Ultraschalldaten korrigiert.

Nach einer Ausführungsform wird das Volumen aus den Druckdaten mithilfe der adiabatischen Zustandsgleichung für reale Gase bestimmt. Wird Fluid in den Speicher gepresst, so führt die Bewegung des Trennelements zu einer Druckänderung im Gasraum. Die Temperatur im Gas steigt bei Kompression zunächst adiabatisch an, um sich dann über einen Temperaturausgleich durch die Wandung des Speichers der Temperatur der Umgebung anzugleichen. Für einen genügend kurzen Zeitraum, beispielsweise bis zu zwei Sekunden, kann die Zustandsänderung des Gases adiabatisch betrachtet und berechnet werden. Auf Basis einer Zustandsgleichung des nicht-idealen Gases lässt sich aus dem gemessenen Druck das Volumen und somit die Position des Trennelements ermitteln.

Ein zentrales Element für die Ermittlung der Position des Trennelements ist also zunächst die Berechnung der Volumenänderung des komprimierten oder expandierenden Gases auf Basis einer Zustandsgleichung für reale Gase. Die Benedict- Webb- Rubin- Zustandsgleichung für reale Gase ist z.B. zur Beschreibung dichter Gase geeignet und stellt einen guten Kompromiss zwischen Einfachheit und Genauigkeit dar. In Zustandsgleichungen für reale Gase kann der Druck als Funktion der Temperatur, des Volumens und stoffspezifischer Konstanten ausgedrückt werden. Somit kann unter Berücksichtigung von gasspezifischen und gleichzeitig druck- und temperaturabhängigen Parametern aus dem gemessenen Druck auf das Volumen geschlossen und damit anschließend die Kolbenposition ermittelt werden. Für kleine Änderungen gilt hierbei

$$p * V^{\kappa(p,T)} = konstant .$$

K ist der so genannte Isentropenexponent, der die inneren Freiheitsgrade mehratomiger Gasteilchen beschreibt. Dieser ist stoffspezifisch und hängt von der Temperatur und dem Druck des Gases ab.

Vorzugsweise wird eine Abweichung von der adiabatischen Zustandsänderung adaptiv für eine folgende Positionsbestimmung berücksichtigt. Aufgrund der Wärmeabgabe an die Umgebung und einer begrenzt genauen Kenntnis und Stabilität der relevanten Randbedingungen, wie beispielsweise der Betriebstemperatur, der thermischen Kopplung an die Umgebung oder der Druckverluste, ist die Berechnung mithilfe der Gleichung für adiabatische Zustandsänderungen nicht über einen längeren Zeitraum möglich. Das Befüllen des Speichers dauert typischerweise ca. 3 bis 5 Sekunden. In diesem Zeitraum nimmt die Wandung des Speichers bereits eine große Menge an Energie auf. Dieses Verhalten ist für eine bestimmte Anlage typisch, reproduzierbar und somit auch beschreib- und berechenbar. Durch ein adaptives Verfahren, bei dem die Abweichungen vom adiabatischen Verhalten ermittelt werden, werden die Abweichungen für die nächsten Berechnungen berücksichtigt. Dies geschieht beispielsweise mithilfe der Rechnereinheit und entsprechenden numerischen Verfahren.

Gemäß einer weiteren Ausführungsform wird das Volumen aus den Druckdaten mithilfe einer isothermischen Zustandsgleichung für reale Gase bestimmt. Entspricht die Zustandsänderung des Gases aufgrund des Wärmeaustauschs mit der Umgebung, z.B. nach etwa drei Sekunden, der isothermischen Zustandsänderung, kann die Rechnereinheit zur Bestimmung der Position des Trennelements beispielsweise auf die isothermische Zustandsgleichung für reale Gase zurückgreifen. Das Volumen kann also zunächst gemäß der adiabatischen Zustandsänderung und nach einer bestimmten Zeit gemäß der isothermischen Zustandsänderung bestimmt werden.

Wird beispielsweise ein Mittel zur Wärmespeicherung in den Gasraum eingebracht, befindet sich das System, wie bereits ausgeführt, schon nach kurzer Zeit in einer isothermischen Zustandsänderung. Somit kann zur Bestimmung des Volumens, insbesondere von Anfang an, die Gleichung für isothermische Zustandsänderungen verwendet werden.

Der Isentropenexponent K ist definiert als das Verhältnis der Wärmekapazität bei konstantem Druck zur Wärmekapazität bei konstantem Volumen und entspricht der temperaturbedingten Gasausdehnung. Der Wert hängt von der Zahl der Freiheitsgrade der Gasteilchen ab. Je weniger sich somit das Gas erwärmt, was durch die zusätzliche Kühlung durch das Mittel zur Wärmespeicherung erreicht wird, desto mehr nähert sich das Verhalten dem isothermen Grenzfall an. Die Berechnung gestaltet sich somit einfacher und genauer.

Gemäß einer weiteren Ausführungsform erfolgt die Positionsbestimmung des Trennelements kontinuierlich. Somit ist eine permanente Kontrolle möglich. Alternativ ist auch denkbar, die Positionsbestimmung lediglich einmalig bzw. zu bestimmten Zeitpunkten durchzuführen.

Nachfolgend werden rein beispielhaft vorteilhafte Ausführungsformen unter Bezugnahme auf die beigefügten Zeichnungen beschrieben. Es zeigen:

Fig. 1 eine Schemazeichnung einer Vorrichtung gemäß einer ersten Ausführungsform;

Fig. 2 eine Schemazeichnung einer erfindungsgemäßen Vorrichtung gemäß einer zweiten Ausführungsform;

Fig. 3 eine Schnittansicht einer erfindungsgemäßen Vorrichtung gemäß einer dritten Ausführungsform;

Fig. 4 eine Schnittansicht einer erfindungsgemäßen Vorrichtung gemäß einer vierten Ausführungsform;

Fig. 5 eine Schnittansicht einer erfindungsgemäßen Vorrichtung gemäß einer fünften Ausführungsform;

Fig. 6a eine Schnittansicht einer erfindungsgemäßen Vorrichtung gemäß einer sechsten Ausführungsform;

Fig. 6b und 6c     Detailansichten von Ausschnitten der Vorrichtung gemäß Fig. 6a;

Fig. 7     ein Diagramm zur Darstellung einer isothermischen und adiabatischen Zustandsänderung; und

Fig. 8     eine Schemazeichnung zur Illustration einer adaptiven Auswertung.

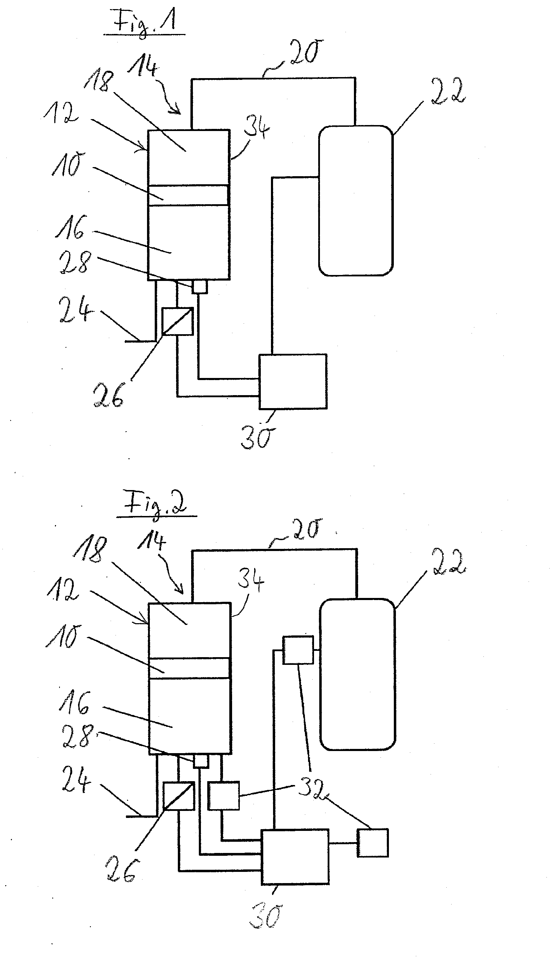

Fig. 1 zeigt eine Vorrichtung zur Bestimmung der Position eines beweglichen Kolbens 10, welcher ein Trennelement 10 bildet. Der Kolben 10 ist innerhalb eines Kolbenspeichers 12 angeordnet und trennt einen Gasraum 14 von einem Fluidraum 16 ab. Der Gasraum 14 umfasst einen Gasspeicher 18, welcher im Speicher 12 angeordnet ist, eine Gasleitung 20 sowie einen Gasbehälter 22. Der Fluidraum 16 ist über einen Anschluss 24 mit einem nicht dargestellten Hydrauliksystem verbunden.

Ein Drucksensor 26 und ein Ultraschallsensor 28 sind sowohl mit dem Fluidraum 16 als auch mit einer Rechnereinheit 30 verbunden.

In Fig. 2 sind zudem drei Temperatursensoren 32 dargestellt. Ein Temperatursensor 32 ist hierbei mit dem Fluidraum 16 und ein weiterer Temperatursensor 32 mit dem Gasbehälter 22 verbunden. Ein zusätzlicher Temperatursensor 32 ist außerhalb der Vorrichtung angeordnet. Alle drei Temperatursensoren 32 sind mit der Rechnereinheit 30 verbunden.

Strömt Fluid, beispielsweise Öl, über den Anschluss 24 in den Fluidraum 16, so verschiebt sich der Kolben 10 infolge des auftretenden Drucks in Richtung Gasspeicher 18. Der Druck im Gasraum 14 wird dadurch erhöht. Die Temperatur im Gas steigt zunächst adiabatisch an, um sich dann über einen Temperaturausgleich durch eine Wandung 34 des Gasraums 14 der Umgebungstemperatur anzugleichen. Für einen kurzen Zeitraum kann die Zustandsänderung des Gases adiabatisch betrachtet werden.

Der Drucksensor 26 misst zunächst den Druck im Fluidraum 16 und übermittelt seine Druckdaten an die Rechnereinheit 30. Basierend auf der adiabatischen Zustandsgleichung für reale Gase ermittelt die Rechnereinheit 30 aus dem gemessenen Druck das Volumen. Da das Gesamtvolumen des Kolbenspeichers 12 bekannt ist, kann somit auch die Position des Kolbens 10 bestimmt werden. Die Zustandsänderung des Gases erfolgt jedoch nur für kurze Zeit adiabatisch. Nach einer gewissen Zeit kommt es zu Abweichungen. Da diese Abweichungen für eine bestimmte Anlage typisch und reproduzierbar sind, können diese beschrieben und berechnet werden. Mithilfe eines adaptiven Verfahrens kann die Rechnereinheit 30 somit Abweichungen vom adiabatischen Verhalten ermitteln und für die nächsten Berechnungen berücksichtigen.

Zudem ermittelt ein Ultraschallsensor 28 Ultraschalldaten, indem Signale in den Fluidraum 16 abgestrahlt werden. Die Signale werden vom Kolben 10 reflektiert und vom Ultraschallsensor 28 wieder empfangen. Somit kann die Position des Kolbens 10 bestimmt werden. Wird die Schallausbreitung in dem Fluid beispielsweise durch Gasblasen gestört, welche z.B. bei einer schnellen Expansion des Fluids auftreten können, ist keine sinnvolle Messung möglich. Zudem können Inhomogenitäten, welche beispielsweise durch eine einströmende, wärmere Flüssigkeit verursacht werden, die Messung beeinträchtigen.

Die Bestimmung der Position des Kolbens 10 erfolgt durch eine Kombination der Druckdaten und der Ultraschalldaten. Hierbei wird z.B. zunächst der Druck im Fluidraum 16 mithilfe des Drucksensors 26 gemessen. Die Daten des Ultraschallsensors 28 werden dazu verwendet, die ermittelte Position des Kolbens 10 zu korrigieren. Dabei werden durch die Rechnereinheit 30 zunächst fehlende oder fehlerhafte Ultraschallmesswerte, welche beispielsweise durch eine sprunghafte Änderung des Messwertes oder durch Werte außerhalb des Kolbenwegs verursacht werden, ausgefiltert. Dabei greift die Rechnereinheit 30 auf geeignete Algorithmen und/oder numerische Verfahren zurück. Umgekehrt ist auch denkbar, die Position des Kolbens mithilfe von Ultraschalldaten zu bestimmen und anhand von Druckdaten zu korrigieren.

Die Temperatursensoren 32 gemäß Fig. 2 bestimmen zudem Temperaturdaten des Fluids, des Gases und der Umgebungstemperatur. Diese Daten fließen ebenfalls in die Bestimmung der Position des Kolbens 10 mit ein. Die Rechnereinheit 30 ist somit in der Lage, anhand der Druckdaten, Ultraschalldaten und Temperaturdaten die Position des beweglichen Kolbens 10 genau zu bestimmen.

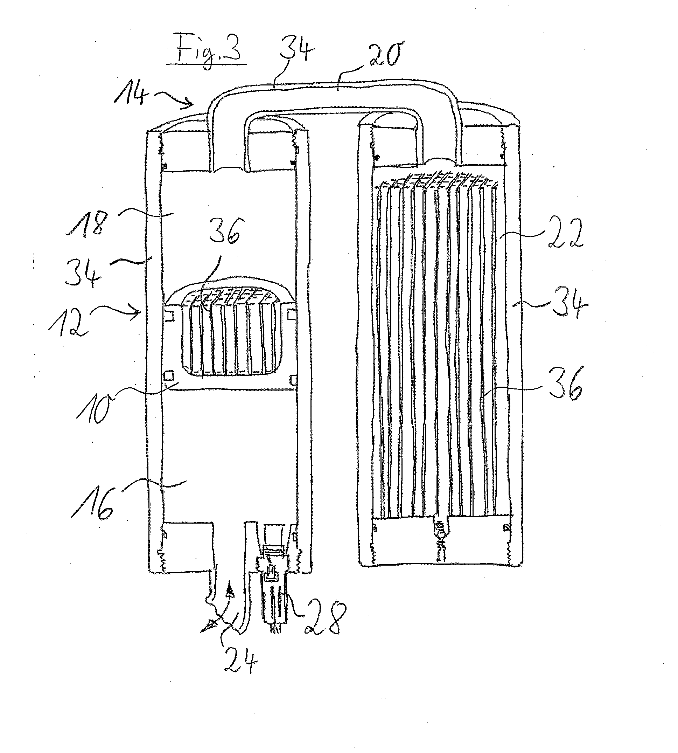

In Fig. 3 ist eine thermische Kapazität 36 gezeigt, welche sowohl in den Gasspeicher 18, genauer in den Kolben 10, als auch in den Gasbehälter 22 eingebracht ist. Die thermische Kapazität 36 stellt ein Mittel zur Wärmespeicherung 36 dar. Die thermische Kapazität 36 besteht aus gitterförmig angeordneten Stahlblechen oder Wellblechzylindern mit einer hohen Wärmeleitfähigkeit und einer großen Oberfläche. Die Wärmeleitfähigkeit der Kapazität 36 ist insbesondere höher als die Wärmeleitfähigkeit der Wandung 34 des Gasraums 14.

Der Volumenanteil der thermischen Kapazität 36 im Kolben 10 bzw. im Gasbehälter 22 kann zwischen etwa 5 % und 15 %, vorzugsweise etwa 10 %, betragen.

Erhöht sich der Druck im Gas, kühlt sich das Gas aufgrund der thermischen Kapazität 36 sofort ab, sodass der Druck im Gasraum 14 bereits während der Kompression geringer ist. Der Kolbenspeicher 12 kann dadurch mehr Energie aufnehmen, wodurch die Speicherkapazität erhöht wird. Der Gasdruck stellt sich daher schnell auf die Isotherme ein. Die Rechnereinheit 30, welche auf die Druckdaten des Drucksensors 26, die Ultraschalldaten des Ultraschallsensors 28 und gegebenenfalls auf Temperaturdaten des Temperatursensors 32 zurückgreift, berechnet somit das Volumen und damit auch die Position des Kolbens 10 auf Grundlage der Gleichung für isothermische Zustandsänderungen für reale Gase.

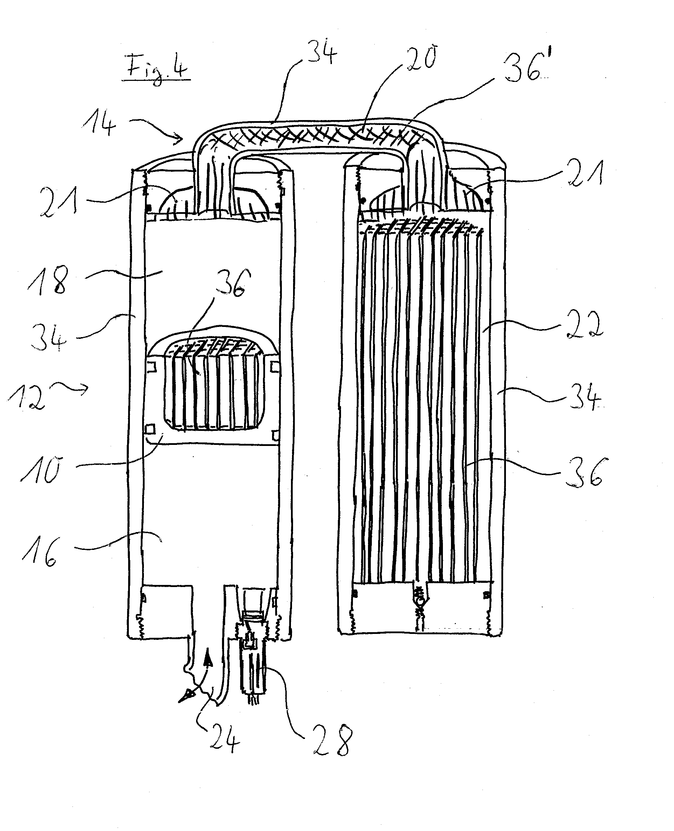

Fig. 4 entspricht im Wesentlichen der Ausführungsform gemäß Fig. 3. In der Gasleitung 20 und in den Gasanschlüssen 21 ist jedoch zusätzlich eine thermische Kapazität 36' vorgesehen. Der Volumenanteil dieser thermischen Kapazität 36' kann insbesondere größer als im Kolben 10 oder im Gasbehälter 22 sein und zwischen etwa 20 % und 70 %, vorzugsweise zwischen etwa 30 % und 40 %, betragen.

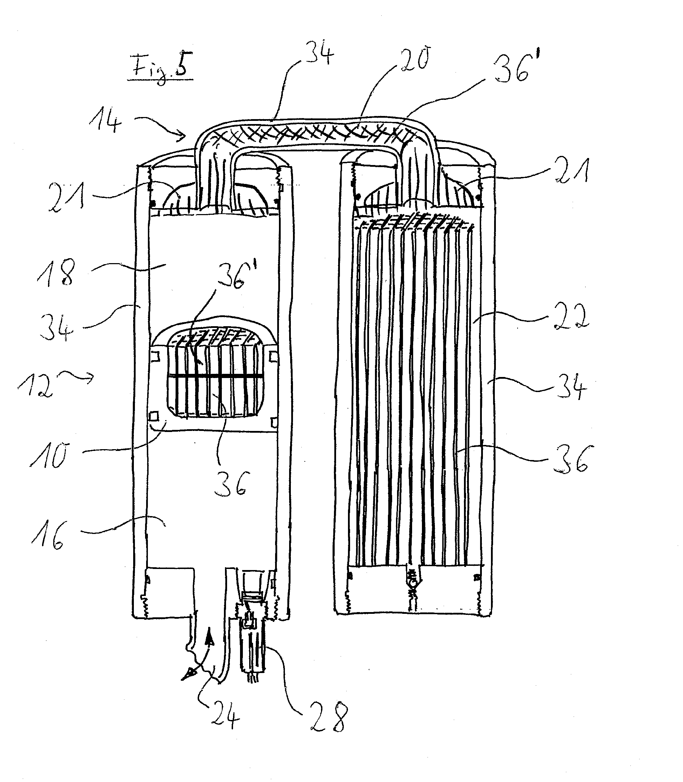

Fig. 5 entspricht im Wesentlichen dem Ausführungsbeispiel gemäß Fig. 4. Das Trennelement 10 ist hierbei jedoch in zwei Bereiche unterteilt. In einem ersten Bereich entspricht der Volumenanteil der Wärmekapazität 36 mit z.B. etwa 10 % insbesondere dem Volumenanteil im Gasbehälter 22. Dieser ist vorzugsweise kleiner als in einem zweiten, unmittelbar an den Gasraum 18 anschließenden Bereich. Dort liegt der Volumenanteil der Wärmekapazität 36' z.B. in einem Bereich zwischen etwa 20 % und 70 %, vorzugsweise zwischen etwa 30 % und 40 %, und entspricht insbesondere etwa dem Volumenanteil in der Gasleitung 20.

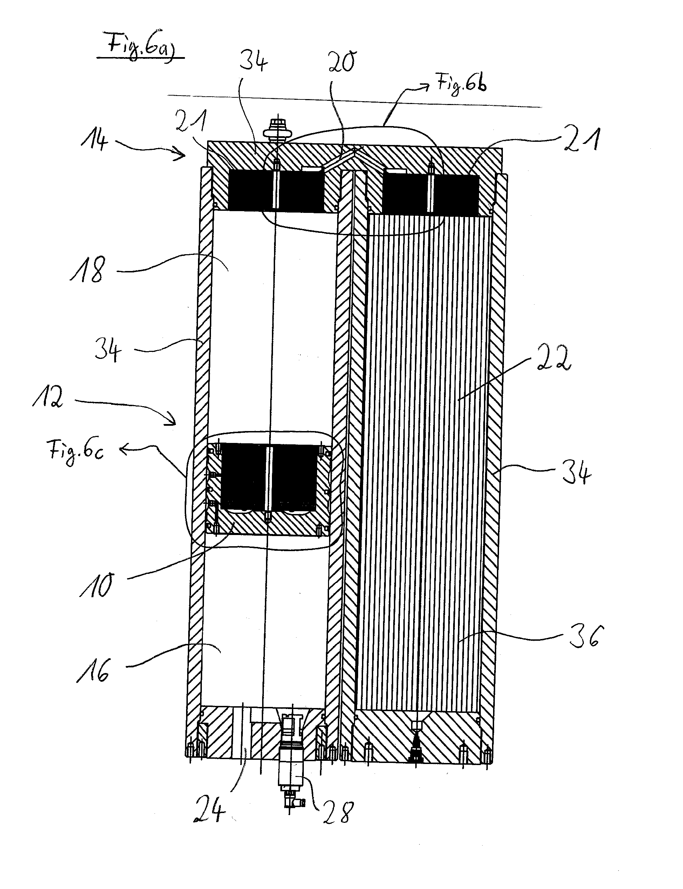

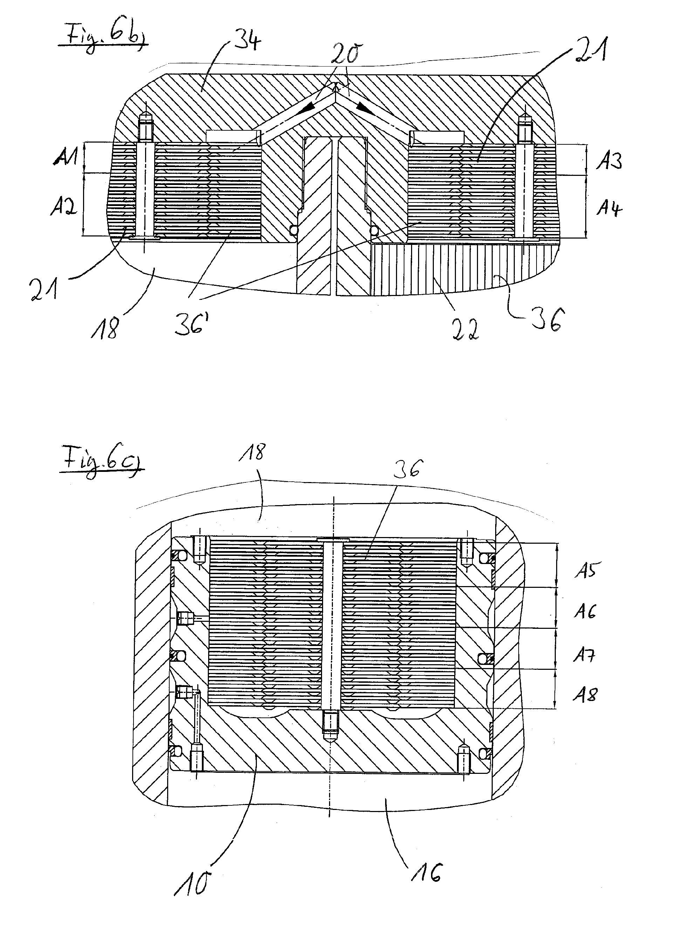

Fig. 6a mit den Detailansichten Fig. 6b und 6c entspricht im Wesentlichen dem Ausführungsbeispiel gemäß Fig. 4. Wie vor allem in Fig. 6b zu sehen ist, sind die Gasanschlüsse 21 als eine Art Deckel für den Gasspeicher 18 und den Gasbehälter 22 ausgebildet. In den Gasanschlüssen 21 ist eine thermische Kapazität 36' vorgesehen. Die Gasleitung 20 selbst weist hingegen keine thermische Kapazität 36' auf. Es kann jedoch auch dort eine thermische Kapazität vorgesehen sein.

Die thermische Kapazität 36' der Gasanschlüsse 21, welche durch Wärmepufferbleche gebildet werden kann, ist in unterschiedliche Bereiche A1, A2, A3 und A4 aufgeteilt. Das Volumen von A2 entspricht dem Volumen von A4. Diese nehmen jeweils ein Drittel des Gesamtvolumens der Gasanschlüsse 21 ein. Die Volumen A1 und A3 sind gleich groß, nehmen jedoch nur insgesamt ein Drittel des Gesamtvolumens der Gasanschlüsse 21 ein.

Der Volumenanteil an Eisen beträgt in A1 und A3 je etwa 30 %, in A2 etwa 40 % und in A4 etwa 20 %.

Wie in Fig. 6c zu sehen ist, ist der Kolben 10 in die Bereiche A5, A6, A7 und A8 unterteilt. Die thermische Kapazität 36, welche durch Wärmepufferbleche gebildet werden kann, ist in den einzelnen Bereichen unterschiedlich. Der Volumenanteil an Eisen beträgt in A5 etwa 40 %, in A6 etwa 30 %, in A7 etwa 20 % und in A8 etwa 10 %.

Sowohl die Gasanschlüsse 21 als auch der Kolben 10 können in mehr oder weniger Bereiche - gegebenenfalls mit anderen Werten für den Volumenanteil an Eisen - als dargestellt unterteilt werden.

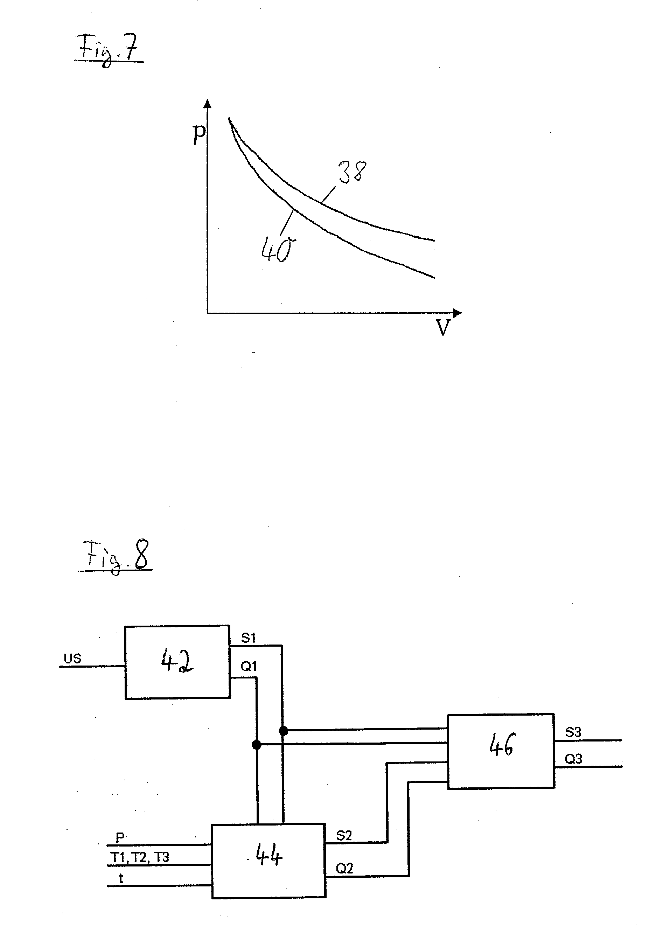

Fig. 7 zeigt die Abhängigkeit des Drucks p vom Volumen V für eine isotherme Zustandsänderung 38 sowie für eine adiabatische Zustandsänderung 40. Beide Kurven bzw. die den Kurven zugrunde liegenden Gleichungen können zur Bestimmung des Volumens und somit der Position des Kolbens 10 verwendet werden.

Je nach Zustandsänderung greift die Rechnereinheit 30 auf die isotherme Zustandsgleichung oder die adiabatische Zustandsgleichung für reale Gase zurück. Gemäß Fig. 1 und Fig. 2 kann dabei beispielsweise ausschließlich die adiabatische Zustandsgleichung verwendet werden. Für einen kurzen Zeitraum nach der Kompression, insbesondere für bis zu einer Sekunde, wird dadurch das Verhalten korrekt beschrieben. Anschließend weicht das tatsächliche Verhalten von der adiabatischen Zustandsänderung 40 ab. Dieser Abweichung kann beispielsweise durch ein adaptives Verfahren entgegnet werden, das im Zusammenhang mit Fig. 8 noch näher erläutert wird.

Alternativ oder zusätzlich kann ab einem bestimmten Zeitpunkt, beispielsweise nach einer Sekunde, die isotherme Zustandsgleichung angewandt werden. In den Ausführungsbeispielen gemäß Fig. 3, 4, 5 und 6a befindet sich das Gas quasi permanent in einem isothermen Zustand. Daher verwendet die Rechnereinheit 30 zur Berechnung des Volumens aus dem Druck die isotherme Zustandsgleichung.

Fig. 8 veranschaulicht ein adaptives Verfahren zur Bestimmung der Position des Kolbens 10 auf Basis von Ultraschallmesswerten US, Druckmesswerten p und Temperaturmesswerten T1, T2, T3. In einer Rechnereinheit 30 gemäß Fig. 2 sind hierbei eine Ultraschallauswerteeinheit 42, eine Berechnungseinheit 44 und eine Ausgabeeinheit 46 angeordnet.

Aus den Ultraschallmesswerten US wird über eine Auswertungsfunktion der Ultraschallauswerteeinheit 42 eine Kolbenposition S1 bestimmt und bewertet. Neben der über die Laufzeit der Ultraschallwellen berechneten Kolbenposition S1 wird auch ein Vertrauensgrad Q1 für diesen Wert ermittelt. Dieser Vertrauensgrad Q 1 ist ein Maß dafür, mit welcher Wahrscheinlichkeit dieser Wert innerhalb einer definierten Verteilung um den realen Wert liegt. Kriterien für die Bestimmung des Vertrauensgrades Q1 sind die Intensität des reflektierten Ultraschallsignals, die ermittelte Beschleunigung des Kolbens 10, fehlende Ultraschallsignale oder auch Mehrfachreflexionen. Abrupte Sprünge oder unrealistisch schnelle Änderungen der Kolbenposition S1 resultieren beispielsweise in einem sehr niedrigen Vertrauensgrad Q 1.

Aus dem gemessenen Druck p und den gemessenen Temperaturen T1, T2, T3 und aus deren Verlauf über die Zeit t wird das Volumen V des Gases berechnet. Die Berechnung erfolgt hierbei über eine Berechnungsfunktion der Berechnungseinheit 44 auf Basis der Zustandsgleichung des realen Gases. Aus dem Volumen V lässt sich wiederum die Kolbenposition S2 ableiten. Auch für die so bestimmte Kolbenposition S2 lässt sich ein Vertrauensgrad Q2 bestimmen, der von der Genauigkeit der einzelnen Sensoren und vor allem vom Gradienten der Änderung der einzelnen Messwerte

abhängt.

$p * V \kappa^{(p,T)}$ ist für kleine Änderungen konstant. Je größer die Änderung, desto größer ist die mögliche Abweichung, womit auch der Vertrauensgrad Q2 entsprechend kleiner wird. Zwischen Druck p und Volumen V gibt es einen stetigen Zusammenhang, d.h. sprunghafte oder unrealistisch starke Änderungen resultieren in einem niedrigen Vertrauensgrad Q2.

Die über die Zustandsgleichung berechnete Kolbenposition S2 wird in der Berechnungsfunktion der Berechnungseinheit 44 mit der Kolbenposition S1 abgeglichen, die aus der Ultraschallmessung mithilfe der Ultraschallauswerteeinheit 42 ermittelt wurde. Bei einem hohen Vertrauensgrad der Ultraschallmessung Q1 wird die über die Zustandsgleichung berechnete Kolbenposition S2 bei abweichendem Ergebnis korrigiert. Diese Korrektur geht als adaptiver Parameter in die Berechnung der Zustandsgleichung mit ein und wird für die weitere Berechnung berücksichtigt. Die Berechnungsfunktion der Berechnungseinheit 44 bestimmt also das Volumen und damit die Kolbenposition Q2 aus den gemessenen Druckwerten p und Temperaturen T1, T2, T3, korrigiert diese Berechnung bei Ultraschallergebnissen mit hohem Vertrauensgrad Q1 und interpoliert mit Hilfe der berechneten Werte in den Bereichen, in denen die Ultraschallmessung einen niedrigen Vertrauensgrad Q1 hat.

Typische Zeitabstände, die durch Interpolation überbrückt werden müssen, liegen in der Größenordnung von ca. einer Sekunde. Für die so berechnete Kolbenposition S3 wird wiederum ein Vertrauensgrad Q3 bestimmt, der sich im Wesentlichen aus den Vertrauensgraden Q1 der Ultraschallmessung und der Berechnung ergibt.

Über eine Ausgabefunktion der Ausgabeeinheit 46 wird die Kolbenposition S3 weitergegeben. Hierbei wird in Abhängigkeit vom Vertrauensgrad Q3 entweder die aus der Zustandsgleichung berechnete und mit Hilfe von Ultraschallergebnissen gestützte Kolbenposition S3 oder bei genügend hohem Vertrauensgrad Q1 auch das Ultraschallergebnis zur Kolbenposition S1 direkt ausgegeben. Der Vertrauensgrad Q3 der Kolbenposition S3 der Ausgabefunktion der Ausgabeeinheit 46 setzt sich aus den Vertrauensgraden Q1, Q2 der Eingangswerte zusammen und kann dazu verwendet werden, eine Fehlermeldung oder ein Warnsignal zu erzeugen, sobald ein definierter Vertrauensgrad unterschritten ist und die ermittelte Kolbenposition S3 zu ungenau ist.

Eine Kühlung des Gases, beispielsweise durch ein Mittel zur Wärmespeicherung 36 gemäß Fig. 3, ist für die Genauigkeit und den Vertrauensgrad Q3 der berechneten Kolbenposition S3 vorteilhaft.

Das erfindungsgemäße Verfahren ermöglicht somit bei kompakter Bauweise eine exakte Bestimmung der Position des beweglichen Trennelements 10.

Bezugszeichenliste

| | |
|---|---|
| 10 | Kolben, Trennelement |
| 12 | Kolbenspeicher, Speicher |
| 14 | Gasraum |
| 16 | Fluidraum |
| 18 | Gasspeicher |
| 20 | Gasleitung |
| 21 | Gasanschluss |
| 22 | Gasbehälter |
| 24 | Anschluss |
| 26 | Drucksensor |
| 28 | Ultraschallsensor |
| 30 | Rechnereinheit |
| 32 | Temperatursensor |
| 34 | Wandung |
| 36, 36' | thermische Kapazität, Mittel zur Wärmespeicherung |
| 38 | isotherme Zustandsänderung |
| 40 | adiabatische Zustandsänderung |
| 42 | Ultraschallauswerteeinheit |
| 44 | Berechnungseinheit |
| 46 | Ausgabeeinheit |
| A1, A2, A3, A4, A5, A6, A7, A8 | Bereich |

(fortgesetzt)

| p | Druck |
|---|---|
| V | Volumen |
| US | Ultraschallmesswert |
| T1, T2, T3 | Temperatur |
| t | Zeit |
| S1, S2, S3 | Kolbenposition |
| Q1, Q2, Q2 | Vertrauensgrad |

**Patentansprüche**

1. Vorrichtung zur Bestimmung der Position eines beweglichen Trennelements (10), das innerhalb eines Speichers (12) als Abtrennung zwischen einem Gasraum (14) und einem Fluidraum (16) angeordnet ist, wobei die Bestimmungsvorrichtung zumindest einen Drucksensor (26) zur Erfassung von Druckdaten, zumindest einen Ultraschallsensor (28) zur Erfassung von Ultraschalldaten und zumindest eine Rechnereinheit (30) zum Auswerten der Daten umfasst, mit der die Position des Trennelements (10) bestimmbar ist, **dadurch gekennzeichnet, dass** die Bestimmungsvorrichtung zumindest einen Temperatursensor (32) zur Erfassung von Temperaturdaten umfasst.

2. Vorrichtung nach Anspruch 1,
   **dadurch gekennzeichnet, dass** ein Temperatursensor (32) mit dem Fluid und/oder ein Temperatursensor (32) mit dem Gas und/oder ein Temperatursensor (32) mit der Umgebungsluft wärmegekoppelt ist.

3. Vorrichtung nach Anspruch 1 oder 2,
   **dadurch gekennzeichnet, dass** in dem Trennelement (10) und/oder in einer Gasleitung (20) zwischen einem Gasspeicher (18) und einem Gasbehälter (22) und/oder in einem Gasbehälter (22) ein Mittel, insbesondere ein Festkörper, zur Wärmespeicherung (36, 36') angeordnet ist.

4. Vorrichtung nach Anspruch 3,
   **dadurch gekennzeichnet, dass** der Volumenanteil des Mittels zur Wärmespeicherung (36, 36'), insbesondere der Volumenanteil an Metall, vorzugsweise Eisen, im Trennelement (10), in der Gasleitung (20) und/oder im Gasbehälter (22) unterschiedlich ist.

5. Vorrichtung nach Anspruch 3 oder 4,
   **dadurch gekennzeichnet, dass** der Volumenanteil des Mittels zur Wärmespeicherung (36') in der Gasleitung (20) zwischen etwa 20 % und 70 %, vorzugsweise zwischen etwa 30 % und 40 %, und/oder der Volumenanteil des Mittels zur Wärmespeicherung (36) in dem Gasbehälter (22) zwischen etwa 5 % und 15 %, vorzugsweise etwa 10 %, beträgt.

6. Vorrichtung mit einem Speicher (12) und einem beweglichen Trennelement (10), das innerhalb des Speichers (12) als Abtrennung zwischen einem Gasraum (14) und einem Fluidraum (16) angeordnet ist,
   **dadurch gekennzeichnet, dass** in dem Trennelement (10) ein Mittel, insbesondere ein Festkörper, zur Wärmespeicherung (36, 36') angeordnet ist.

7. Vorrichtung nach einem der Ansprüche 3 bis 6,
   **dadurch gekennzeichnet, dass** der Volumenanteil des Mittels zur Wärmespeicherung (36) im Trennelement (10) zwischen etwa 5 % und 15 %, vorzugsweise etwa 10 %, beträgt oder dass das Trennelement (10) zumindest zwei Bereiche mit einem unterschiedlichen Volumenanteil des Mittels zur Wärmespeicherung (36, 36') aufweist, wobei insbesondere der Volumenanteil des Mittels zur Wärmespeicherung (36) in einem ersten Bereich zwischen etwa 5 % und 15 %, vorzugsweise etwa 10 %, und der Volumenanteil des Mittels zur Wärmespeicherung (36') in einem zweiten Bereich zwischen etwa 20 % und 70 %, vorzugsweise zwischen etwa 30 % und 40 %, beträgt.

8. Vorrichtung nach einem der Ansprüche 3 bis 7,
   **dadurch gekennzeichnet, dass** das Mittel zur Wärmespeicherung (36, 36') eine höhere Wärmeleitfähigkeit als eine Wandung (34) und/oder eine größere Oberfläche als eine Innenfläche einer Wandung (34)des Gasraums (14) aufweist.

9. Verfahren zur Bestimmung einer Position eines Trennelements (10), das sich innerhalb eines Speichers (12) zwischen einem Gasraum (14) und einem Fluidraum (16) bewegt und diese Räume voneinander trennt, umfassend folgende Schritte:

(a) Erfassen von Druckdaten, insbesondere im Fluidraum (16), mithilfe zumindest eines Drucksensors (26);
(a') Erfassen von Temperaturdaten, insbesondere des Fluids und/oder des Gases und/oder der Umgebungsluft, mithilfe zumindest eines Temperatursensors (32);
(b) Übertragen der Druckdaten und Temperaturdaten an zumindest eine Rechnereinheit (30), welche die Druckdaten und Temperaturdaten auswertet und daraus das Volumen und die Position des Trennelements (10) bestimmt;
(e) Erfassen von Ultraschalldaten, insbesondere im Fluidraum (16), mithilfe zumindest eines Ultraschallsensors (28);
(f) Übertragen der Ultraschalldaten an die Rechnereinheit (30), welche mithilfe der Ultraschalldaten die Positionsbestimmung des Trennelements (10) korrigiert.

10. Verfahren nach Anspruch 9,
**dadurch gekennzeichnet, dass** fehlerhafte und/oder fehlende Ultraschalldaten ausgefiltert und nicht zur Korrektur der Positionsbestimmung gemäß Verfahrensschritt (f) verwendet werden.

11. Verfahren nach Anspruch 9 oder 10,
**dadurch gekennzeichnet, dass** das Volumen aus den Druckdaten gemäß Verfahrensschritt (b) mithilfe der adiabatischen Zustandsgleichung für reale Gase bestimmt wird.

12. Verfahren nach Anspruch 11,
**dadurch gekennzeichnet, dass** eine Abweichung von der adiabatischen Zustandsänderung adaptiv für eine folgende Positionsbestimmung berücksichtigt wird.

13. Verfahren nach einem der Ansprüche 9 bis 12,
**dadurch gekennzeichnet, dass** das Volumen aus den Druckdaten gemäß Verfahrensschritt (b) mithilfe der isothermen Zustandsgleichung für reale Gase bestimmt wird.

14. Verfahren nach zumindest einem der Ansprüche 9 bis 13,
**dadurch gekennzeichnet, dass** Gasverluste mittels des Temperatursensors (32) bestimmt werden.

Fig. 1

Fig. 2

Fig.3

Fig.4

Fig.5

Fig.6a)

Fig. 6b)

34    20    21

A1
A2

21

18    36'    22    36

A3
A4

Fig. 6c)

18    36

A5
A6
A7
A8

10    16

Fig. 7

Fig. 8